Europäisches Patentamt

European Patent Office

Office européen des brevets

(11) Publication number: **0 279 985**
**A2**

# EUROPEAN PATENT APPLICATION

(21) Application number: 87310743.7

(51) Int. Cl.4: **H01B 1/24**

(22) Date of filing: 07.12.87

(30) Priority: 03.02.87 US 10214

(43) Date of publication of application:
**31.08.88 Bulletin 88/35**

(84) Designated Contracting States:
**AT CH DE ES GB LI NL SE**

(71) Applicant: **MINNESOTA MINING AND
MANUFACTURING COMPANY
3M Center
Saint Paul, Minnesota 55101(US)**

(72) Inventor: **Wouters, Edwin J. c/o Minnesota
Mining and
Manufacturing Company 2501 Hudson Road
St. Paul Minnesota 55133-3427(US)**

(74) Representative: **Bowman, Paul Alan et al
LLOYD WISE, TREGEAR & CO. Norman
House 105-109 Strand
London WC2R OAE(GB)**

(54) **Electrically conductive thermoplastic resin composition.**

(57) A conductive thermoplastic resin composition containing at most 8% by volume carbon fibre. The composition is colourable and in the preferred case has improved shielding to electromagnetic interference.

EP 0 279 985 A2

## ELECTRICALLY CONDUCTIVE THERMOPLASTIC RESIN COMPOSITION

This invention relates to electrically conductive, thermoplastic resin compositions and to articles prepared therefrom.

Electrically conductive, thermoplastic resin compositions have found utility in a variety of ways. For example, they may be used in static electricity dissipation devices, electrical heating elements, terminals, connectors, electronic equipment housings, containers to transport or store electronic components, and the like.

While many conductive resin compositions have been suggested for these uses, they generally have been unsuitable for one or more reasons. For example, many are unsuitable because they are transparent or permeable to electromagnetic interference (EMI). This transparency is of considerable concern because of the susceptibility of electronic components to be adversely affected by EMI emission.

A number of approaches have been tried to solve this problem. In one, a composite of a platic material and a metallic surface coating is used as an EMI shield. The coating has been applied by a variety of techniques such as vacuum deposition, application of metal foil linings or metal-filled spray coatings, zinc flame spray, and electric arc discharge. However, these application techniques are each accompanied by one or more disadvantages including cost, adhesion to the plastic, scratch resistance of the coating, environmental resistance, the length of time required for application, and difficulty in application to the diverse geometric forms which the plastic part is provided in.

In another approach, the use of composite plastic materials based upon the use of various conductive fillers and thermoplastic matrices has been employed to solve the problem created by EMI emission. However, none of these composites have proven completely satisfactory. For example, U.S. Patent 4,338,422 discloses a composite plastic material comprising a thermoplastic resin matrix, metallized glass fibers and carbon fibers. The proportion of metallized glass fiber to carbon fiber within the composition can range from about 20% to 80%. However, optimum results are said to occur when the composition comprises 3 parts of metallized glass fiber to about 1 part of carbon fiber.

U.S. Patent 4,610,808 discloses the use of conductive particles (which are either metal particles or metallized, non-conductive particles) and a finely divided, hard, low aspect ratio filler in a resinous matrix.

The compositions of these patents rely upon the use of metal or metal-containing particles to achieve conductivity. This increases the density of the composition and increases its cost of manufacture.

Moreover, the use of carbon black in the thermoplastic resin suffers from the serious disadvantages that the resulting composition is not particularly electrically conductive and is incapable of being provided in any color other than black.

In another approach, conductive additives such as carbon fibers have been included in thermoplastic resins at levels "as low as 10% by weight" (9% by volume). These compositions, available from Wilson-Fiberfil International, a division of Plastic Specialties and Technologies, Inc. as Electrafil® electrically conductive thermoplastics, are said to impart "excellent surface conductivity" and provide shielding against EMI and radio frequency interference (RFI).

Another composition utilizing thermoplastic resin and at least 10% by weight carbon fibers has been employed by the Minnesota Mining and Manufacturing Company to manufacture tote boxes for transporting electronic components such as printed circuit boards (pcb's). The composition used in these boxes is known as KromeneTM.

Each of these compositions are conductive. However, they are relatively difficult to process because of the loading of carbon fiber employed. Thus, the compositions require additional mixing in order to properly disperse the fibers. However, such additional mixing increases the risk that the fibers will be broken thereby diminishing their effectiveness in the final comoposition.

The present invention overcomes these disadvantages of the prior art. It provides a highly conductive thermoplastic resin composition which does not require the presence of metal or metal-containing particles to achieve such conductivity. Surprisingly this high conductivity is achieved even through a lesser amount of carbon fiber is utilized. The use of less carbon fiber provides the additional benefit that less mixing is required to properly disperse the fibers thereby decreasing the risk of fiber breakage and increasing their effectiveness. The composition comprises a thermoplastic resin as a major component and carbon fiber as a minor component. Surprisingly, the fiber comprises no more than 8% by volume of the composition. As used herein, the term conductivity means that the composition has a resistivity of no more than 500 ohm-cm as measured according to ASTM D991 modified to employ conformable electrodes (i.e., silver-loaded conformable electrodes) so as to provide maximum contact to the sample being tested.

Preferably, the composition of the invention has an electrical resistivity of no more than 100 ohm-cm

2

(characteristic of compositions having electrostatic shielding capabilities). More preferably, the composition of the invention has an electrical resistivity of no more than 10 ohm-cm (characteristic of compositions having EMI shielding capabilities).

In addition to the above advantages, the composition of the invention is colorable. Thus, it may be changed from its normal gray appearance to a color of choice by the appropriate selection and incorporation of colorants.

The compositions of the invention may be prepared by a variety of techniques. For example, the ingredients may be dry mixed to room temperature in a suitable vessel (such as a blender), extruded through a die so as to form a molten stream of masticated resin having the fiber distributed therein, solidified and pelletized. The pelletized composition may then be subsequently processed to form a desired article.

As noted above, the compositions comprise a thermoplastic resin and carbon fiber as essential ingredients. Examples of useful thermoplastic resins include:

A. vinyl polymers such as polypropylene (i.e., Norchem™ 8020GU from Northern Petrochemical) copolymers of ethylene and propylene, polystyrene (i.e. Lustrex™ 4220 from Monsanto), polyvinyl chlorides (i.e, B-247-CL-34 from GA Gulf), polyvinylidene chlorides, copolymers of vinyl chloride and vinylidene chloride;

B. polyamides such as nylon (i.e, Zytel GRZ from E. I. duPont de Nemours, Inc.);

C. polyacetals such as the Delrin™ series of resins available from E.I. duPont de Nemours, Inc.);

D. polyesters such as polyethylene terephthalate and polybutylene terephthalate such as the Valox™ series of resins available from General Electric;

E. polycarbonates such as the Lexan™ series of resins available from General Electric and the Merlon™ series of resins available from Mobay Chemical;

F. polyurethanes;

G. cellulose esters;

H. aromatic polyethers such as polyphenylene oxide (i.e., Noryl™ N-225 from General Electric), polyphenylene sulfide (i.e., Ryton™ R3 available from Phillips Chemical), polyphenylene ether (i.e., Prevex™VKA1010 from Borg-Warner);

I. acrylic polymers;

J. polymers based on acrylonitrile-butadiene-styrene such as Cycolac™KJU from Borg-Warner;

K. blends of two or more thermoplastic resins;

L. thermoplastic elastomers such as those based on styrene and butadiene, ethylene, or propylene;

M. graft polymers;

N. polymer alloys;

O. polysulfones;

P. etc.

As shown in the above list, the thermoplastic resins useful in the present invention are not limited to linear aliphatic compounds. They may be linear, nonlinear, aliphatic, aromatic, and may contain a variety of atoms other than the carbon and hydrogen. For example, they may contain oxygen, sulfur, phosphorous, nitrogen, and halogen items such as chlorine, bromine, fluorine and the like.

The carbon fiber employed in the present invention comprises no more than 8% by volume of the composition. Surprisingly, however, the composition of the invention is conductive even at levels of the fiber as low as 6% by volume.

The carbon fiber may be chosen from conventionally known carbon fibers such as those derived from polyacrylonitrile or pitch. Other carbon fibers may be employed if so desired. Typically the fibers have a diameter of from 5 to 10 microns, and preferably from 6 to 9 microns, and a length of from 2 to 10 mm, and preferably from 3 to 6 mm.

A number of other ingredients may be incorporated into the compositions of the invention. They include impact-modifiying agents, colorants, fillers, antistatic agents, processing aids, and the like. While these materials are not critical to the invention, their presence may improve the performance of the composition with respect to certain characteristics. The amount of these ingredients incorporated will, of course, vary with the particular purpose and should not adversely affect the composition.

Impact-modifying agents are employed so as to enhance the impact strength of the composition. A number of materials are useful as the impact modifier. Examples of useful impact modifiers include the hybrid copolymers formed by graft-type polymerization and block-type polymerization. Such polymers may be prepared from vinyl aromatics, acrylates, acrylonitriles and rubbery or elastomeric polymer-forming monomers. The Kraton series of block copolymers available from Shell Chemical Company comprises a specific class of these materials.

Other impact-modifying agents include plasticizers. The exact plasticizer chosen may be varied but should be selected so as to be compatible with the thermoplastic resin. A wide variety of resins are useful including, for example, adipic acid derivatives, benzoic acid derivatives, epoxy derivatives, glycolates, phosphoric acid derivatives, phthalic acid derivatives, sulfonic acid derivatives, and others. Specific examples of these and other useful plasticizers may be found in the Encyclopedia of Polymer Technology and other sources.

The quantity of impact modifier employed may be varied to suit the particular needs or desired result. It has been found that up to 10% by weight of the composition of the impact modifier may be employed. Higher levels of impact modifier may also be employed if highly flexible, impact-resistant articles are desired. Preferably the impact modifier comprises from 3 to 8% by weight of the composition.

Colorants which may be employed in the invention include pigments or dyes. They can comprise up to 20% by weight of the compositon. Preferably, they comprise from 0.1 to 2% by weight of the composition.

While the amount of the colorant is not critical to the invention, the amount employed must be such as to not adversely affect the electrical conductivity of the composition. Within this framework the colorants are utilized so as to change the color of the composition. Preferably the composition of the invention are medium gray in color and have an L lightness value of at least about 50. This enables the color of the composition to be readily changed to a color of choice such as black, blue, brown, green, red, and the like by the appropriate selection and incorporation of a colorant.

Examples of useful pigments include carbon black, titanium dioxide, Chrome Yellow (CI 77603 and 77600), Cadmium Yellow (CI 77205 and 77199), Molybdate Oranges (CI 77605), Cadmium Oranges (CI 77202), Organic Oranges (CI 12075 and 21160), Cadmium Reds (CI 77202), Toluidine Reds (CI 12120), Iron Blues (CI 77510), Phthalocyanine blues (CI 74160), Chrome Greens (CI 77510 and 77603) and Chrome Oxides (CI 77288). Other pigments may be used if desired as may organic and inorganic dyes.

Fillers may also be employed in the composition. Such materials include powdered, granular, particulate, fibrous or finely divided fillers such as clay, talc, glass beads or bubbles, rubbery granular aggregate (such as scrap rubber obtained from tires), diatomaceous earth, glass fibers and the like. Fillers may comprise up to 50% by weight of the composition.

Antistatic agents may also be employed in the composition of the invention. Examples of useful antistatic agents include quaternary ammoniums such as propoxylated quaternary ammonium chlorides, acetates, and phosphates; organic phosphate esters; alkanolamides; glycerol mono-and distearates; glycerol mono-and dioleates; imidazolines; alkaryl sulfonates; and the like. These materials may comprise up to 5% by weight of the thermoplastic resin composition of the invention.

The compositions of the invention can be prepared as discussed above. The optional ingredients (i.e., impact modifiers, colorants, antistatic agents, fillers) may be added during the dry mixing step. It is preferred that comparatively low speed or mild agitation be utilized during dry mixing blending step to minimize fiber breakage.

The following examples are intended to further illustrate the present invention without limiting the scope thereof.

Example 1

A series of thermoplastic resin compositions were prepared using the following ingredients.

1. Thermoplastic Resin

### I. Thermoplastic Resin

| RESIN | TYPE | MANUFACTURER/DESIGNATION |
|---|---|---|
| A | Polyphenylene ether/ Styrene Blend | Borg-Warner/Prevex$^{TM}$ VKA 1010 |
| B | Polyester | General Electric/Valox$^{TM}$ DR-48 |
| C | Polystyrene | Monsanto/Lustrex$^{TM}$ 4220 |
| D | Polypropylene | Northern Petrochemical/ Norchem$^{TM}$ 8020GU |
| E | Acrylonitrile-Butadiene- Styrene Copolymer | Borg-Warner/Cycloac$^{TM}$ KJU |
| F | Polyphenylene Oxide | General Electric/Noryl$^{TM}$ N-225 |

Resins A, B, E and F were pigmented with what is believed to be a light colored pigment. Resins C and D were unpigmented.

II. Carbon Fiber

| TYPE | MANUFACTURER/DESIGNATION | COMMENT |
|---|---|---|
| a | Herculese AS 1800 | Polyamide sizing |
| b | Herculese AS 1805 | Polycarbonate sizing |
| c | Herculese AS 1810 | Polyphenylene oxide sizing |
| d | Herculese AS 1815 | Polypropylene/polyvinyl acetate sizing |
| e | Great Lakes Carbon/ Fortafil$^{TM}$ F3(C)1/4, 11 | Nylon sizing |
| f | Great Lakes Carbon/ Fortafil$^{TM}$ F3(C)1/4, 02 | Acrylonitrile-butadiene- styrene sizing |

III. Impact Modifier

KratonTM GS 1650, a styrene-ethylene-butylene-styrene block copolymer commercially available from Shell Chemical Company.

The thermoplastic resin (86 weight %) carbon fiber (9 weight %, 8 volume %) and KratonTM (5 weight %) were dry mixed in a blender at room temperature for 1/2 hour and then introduced into an extruder employing a single stage screw to extrude a strand of molten composition which was quenched by passing it through a water bath. The quenched, solid strand was pelletized and the pellets changed to a second extruder which also employed a single stagescrew. The second extruder was used to injection mold plaques (10 cm x 10 cm x 0.3 cm) of each composition. Plaques made from compositions employing resins A, B, E and F were medium gray in color while those made from compositions employing resins C and D were dark gray in color. All compositions were colorable.

The conductivity of the resulting plaques was measured according to ASTM D991 modified to employ conformable electrodes (i.e, silver-loaded soft rubber electrodes) so as to provide maximum contact to the plaques. The results are reported in Table I in ohm-cm. The lower the value, the higher the conductivity.

## TABLE 1

| THERMOPLASTIC RESIN | a | b | CARBON FIBER c | d | e | f |
|---|---|---|---|---|---|---|
| A | 47 | 2 | $>10^6$ | $>10^6$ | $>10^6$ | 40 |
| B | 4450 | 0.7 | 33 | $>10^6$ | 1.4 | 1300 |
| C | $>10^6$ | 7 | $>10^6$ | $>10^6$ | 1550 | 900 |
| D | $>10^6$ | 3.5 | 16 | $>10^6$ | 2.7 | 60 |
| E | 42 | 0.75 | 0.9 | 1.5 | 1.4 | 3.7 |
| F | 1200 | 0.6 | 0.9 | 7 | 1.5 | 3.1 |

The data demonstrate that although not all combinations are conductive within the context of the present invention, a significant number (60%) are conductive even though only 8% by volume carbon fiber is employed. The conductive compositions all have resistivities which show they possess improved electrostatic shielding. Furthermore, the data demonstrate that a significant number of combinations (53%) also possess EMI shielding capability.

Examples 2-17

A series of thermoplastic resin comopositions were made, converted into 10 cm x 10 cm x 0.3 cm plaques, and then tested for conductivity as described in Example 1. The ingredients employed formulations and the results measured are given in Table 2 where the quantities of all ingredients are reported in parts by weight.

## TABLE 2

|  | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|
| Polyphenylene Ether (Prevex™ VKA 1010) | 82 | 82 | 84 | 84 | 84 | 84 | 85 | 85 | 85 | 85 | $85\frac{1}{2}$ | $85\frac{1}{2}$ | 86 | 86 | 87 | 87 |
| Carbon Fiber (Fortafil™ F3(c)11,1/4 | 10 | 10 | 8 | 8 | 8 | 8 | 7 | 7 | 7 | 7 | $6\frac{1}{2}$ | $6\frac{1}{2}$ | 6 | 6 | 5 | 5 |
| Kraton™ GS1650 | 5 | 5 | 5 | 5 | 5 | 5 | 5 | 5 | 5 | 5 | 5 | 5 | 5 | 5 | 5 | 5 |
| Decabromodiphenyl Oxide | 2 | 2 | 2 | 2 | 2 | 2 | 2 | 2 | 2 | 2 | 2 | 2 | 2 | 2 | 2 | 2 |
| Antimony Oxide | 1 | 1 | 1 | 1 | 1 | 1 | 1 | 1 | 1 | 1 | 1 | 1 | 1 | 1 | 1 | 1 |
| Resistivity (ohm-cm) | 1 | NA | 7.6 | 33.5 | 8.7 | 44.4 | 17.2 | 90.4 | 26.6 | 111.2 | 53.9 | 90.5 | 127.6 | 1057 | $>10^6$ | $>10^6$ |

NA = not available

Examples 18-23

A series of thermoplastic resin compositions were made, converted into 10 cm x 10 cm x 0.3 cm plaques, and then tested for conductivity as described in Example 1. The ingredients employed and the results measured are reported in Table 3 where the quantities of all ingredients are reported in parts by weight.

## TABLE 3

| | 18 | 19 | 20 | 21 | 22 | 23 |
|---|---|---|---|---|---|---|
| Polyphenylene ether (Prevex™ VKA 1010) | 86.75 | 85.75 | 84.75 | 83.75 | 82.75 | 81.75 |
| Carbon Fiber (Fortafil™ F3(C)1/4, 11) | 5 | 6 | 7 | 8 | 9 | 10 |
| Kraton™ GS 1650 | 5 | 5 | 5 | 5 | 5 | 5 |
| Kemamine™ G 650 | 0.25 | 0.25 | 0.25 | 0.25 | 0.25 | 0.25 |
| Decabromodiphenyl Oxide | 2 | 2 | 2 | 2 | 2 | 2 |
| Antimony Oxide | 1 | 1 | 1 | 1 | 1 | 1 |
| Resistivity (ohm–cm) | $>10^6$ | $>10^6$ | 244 | 244 | 2 | 1.3 |

Examples 24-31

A series of thermoplastic resin compositions were made, converted into 10 cm x 10 cm x 0.3 cm plaques, and tested for conductivity as described in Example 1. The plaques were also tested for color using a Hunterlab D25 P Optical Sensor Colorimeter. The ingredients employed and results measured are reported in Table 4 where the quantities of all ingredients are reported in parts by weight.

0 279 985

# TABLE 4

| | 24 | 25 | 26 | 27 | 28 | 29 | 30 | 31 |
|---|---|---|---|---|---|---|---|---|
| Polypropylene (Norchem™ 8020GU) | 91 | 89.5 | 85.5 | 91 | 88 | 84 | 87.5 | 83.5 |
| Carbon Fiber (Fortafil™ F3(C)11, 1/4 | 9 | 9 | 9 | 9 | 9 | 9 | 9 | 9 |
| Titanium Dioxide | - | 1 | 5 | - | - | - | - | - |
| Antimony Trioxide | - | - | - | - | 3 | 7 | 3 | 7 |
| Green Pigment Harshaw Meteor Green | - | 0.5 | 0.5 | - | - | - | 0.5 | 0.5 |
| Resistivity (ohm-cm) | 1.2 | 4.9 | $>10^6$ | 4 | 78 | 202 | 200 | 1500 |
| Color L | 17.3 | 26.2 | 45.5 | 19.5 | 23.1 | 26.7 | 24.1 | 28.7 |
| a | -0.9 | -1.4 | -2.3 | -0.4 | -0.4 | -0.3 | -2.7 | -1.6 |
| b | -0.4 | -4.1 | -5.3 | -1.4 | -2.8 | -3.8 | -3.1 | -4.1 |

The "L", "a" and "b" values mean the following

L = 0: Black

L = 100: White

a (negative value): green shading
(positive value): red shading

b (negative value): blue shading
(positive value): yellow shading

The data of Table 4 indicate that the compositions are colorable.

9

Examples 32-36

A series of thermoplastic resin compositions were made, converted into a 10 cm x 10 cm x 0.3 cm plaques, and tested for conductivity as described in Example 1. The plaques were also tested for color as described in Examples 24-31. The ingredients employed and results measure dare reported in Table 5 where the quantities of all ingredients are reported in parts by weight.

### TABLE 5

| | 32 | 33 | 34 | 35 | 36 |
|---|---|---|---|---|---|
| Polyphenylene ether | | | | | |
| Prevex™ VKA 92247 | 86 | -- | -- | -- | -- |
| Prevex™ VKA 53780 | -- | 86 | -- | -- | -- |
| Acrylonitrile/Butadiene/ | | | | | |
| Styrene Monsanto No. 448 | -- | -- | 100 | 86 | 82 |
| Carbon Fiber | | | | | |
| (Fortafil™ F3(C)$^1_4$,11) | 9 | 9 | -- | 9 | 9 |
| Kraton™ GS 1650 | 5 | 5 | -- | 5 | 5 |
| Harshaw Brown 7735 Pigment | -- | -- | -- | -- | 4 |
| Resistivity (ohm-cm) | 10 | 10 | $>10^6$ | 22 | 105 |
| Color    L | 28.8 | 32.9 | 94.8 | 57.1 | 46.8 |
|          a | -5.4 | 0.6 | 1.9 | 0.7 | 4.6 |
|          b | 2.3 | -24.8 | -2.4 | -9.8 | 1.3 |

All examples except Example 34 were conductive. Example 32 had a camouflage green color; Example 33 a medium blue color; Example 34 a white color; Example 35 a gray color; and Example 36 a purple color.

## Claims

1. A colorable, fiber-containing, electrically conductive composition comprising a thermoplastic resin and up to 8% by volume of a high aspect ratio carbon fiber commingled therewith.

2. An electrically conductive composition according to claim 1 having an electrical resistivity of no more than 500 ohm-centimeters.

3. An electrically conductive composition according to claim 1 containing from 5 to 8% by volume of said carbon fiber.

4. An electrically conductive composition according to claim 1 wherein said carbon fiber has a length of from 2 to 10 millimeters and a diameter of from 5 to 10 microns.

5. A composition according to claim 1 wherein said carbon fiber has an aspect ratio of at least 200.

6. A composition according to claim 1 having an L lightness value of at least about 17.

7. A composition according to claim 1 further comprising up to 10% by volume of an impact modifying component.

8. A composition according to claim 7 wherein said impact modifying agent is selected from the group consisting of plasticizers and hybrid copolymers formed by graft polymerization and block polymerization.

9. A composition according to claim 8 wherein said modifying agent is a hybrid copolymer formed from the group consisting of vinyl aromatic, acrylate, acrylonitrile, rubbery, and elastomeric polymer-forming monomers.

10. A composition according to claim 8 wherein said modifying agent is a plasticizer selected from the group consisting of adipic acid derivatives, benzoic acid derivatives, epoxy derivatives, glycolates, phosphoric acid derivatives, phthalic acid derivatives, and sulfonic acid derivatives.

11. A composition according to claim 9 wherein said hybrid copolymer comprises a block copolymer having styrene end groups and an ethylene-butylene backbone.